Europäisches Patentamt

European Patent Office

Office européen des brevets

(19)

(11) Publication number: **0 209 215 B1**

(12) **EUROPEAN PATENT SPECIFICATION**

(45) Date of publication of patent specification: **12.06.91**   (51) Int. Cl.⁵: **G05D 23/26, H05B 3/00, H05B 6/06**

(21) Application number: **86303261.1**

(22) Date of filing: **29.04.86**

Divisional application 90115677.8 filed on 29/04/86.

(54) Ferromagnetic element with temperature regulation.

(30) Priority: **28.06.85 US 749637**

(43) Date of publication of application:
**21.01.87 Bulletin 87/04**

(45) Publication of the grant of the patent:
**12.06.91 Bulletin 91/24**

(84) Designated Contracting States:
**AT BE CH DE FR GB IT LI SE**

(56) References cited:
**DE-A- 3 304 023**    **DE-B- 2 806 159**
**US-A- 3 924 102**    **US-A- 4 002 882**
**US-A- 4 256 945**    **US-A- 4 507 546**
**US-A- 4 546 238**

**The ARRL 1985 Handbook (62nd Ed., 1985) published by the American Radio Relay League, Chapter 30, pages 30-24 to 30-30**

(73) Proprietor: **METCAL INC.**
**3704 Haven Court**
**Menlo Park California 94025(US)**

(72) Inventor: **William D. Hall**
**10850 Stanmore Drive**
**Potomac Maryland 20854(US)**

(74) Representative: **Hayward, Denis Edward Peter Lloyd Wise, Tregear & Co. Norman House 105-109 Strand London WC2R 0AE(GB)**

## Description

This invention relates to ferromagnetic elements possessing temperature regulation when electrically heated.

It is old and well known to regulate the temperature of a ferromagnetic element by passing a radio frequency current through it. The current heats the element to its effective Curie temperature where, due to a change in permeability of the element, the power drawn by the element declines, and therefore the device will hold its temperature constant. The "effective" Curie is the temperature at which the device regulates its temperature and is 50-100°C below the actual published Curie temperature. Hereafter, when we refer to Curie it should be understood that we are referring to the effective Curie, unless otherwise stated. The current may be fed through the ferromagnetic element directly, as by electrical conductors connected between the element and a source of current, or by induction. However, the known prior art employing a pure ferromagnetic element has the drawback that it will not hold the temperature constant over a wide range of cooling loads.

An improvement in the aforesaid temperature regulation method is known and described in U.S. Patent 4,256,945, issued March 17, 1981, to Philip S. Carter and John F. Krumme, entitled Alternating Current Electrically Resistive Heating Element Having Intrinsic Temperature Control. This patent teaches that the temperature regulation may be improved if the ferromagnetic element surrounds a copper substrate. Below the effective Curie the current is driven into the ferromagnetic surface layer by strong skin effect forces. When the temperature rises above the effective Curie temperature the skin effect is not strong due to the change in permeability of the ferromagnetic material, and at least some of the current retreats the into the copper. This results in a sharp drop in power: since the current is held a s the t is constant throughout the process. Hence, it is possible to design such a ut device that holds its temperature constant over a wider range of thermal cooling loads than was the case with the ferromagnetic element.

The Carter-Krumme patent in col. 7 states the effectiveness of the device in terms of

$$\frac{R_{max}}{R_{min}}$$

where Rmax is the resistance of the device below Curie and $R_{min}$ is the resistance of the device above Curie.

The Carter-Krumme patent teaches that the preferred frequency range is 8 to 20 MHz.

According to the present invention, there is provided a temperature regulating apparatus comprising a ferromagnetic element having a permeability substantially greater than one when its temperature is below its effective Curie temperature, and a source of electrical power supply connected to pass electric current through said element thereby to heat it to raise its temperature to its effective Curie temperature, characterised by control means that includes sensing means for sensing the change in permeability that occurs when the ferromagnetic element has its temperature raised to its effective Curie temperature and switching or modulating means that temporarily interrupts or reduces the power supply to said ferromagnetic element each time the permeability of the ferromagnetic element declines to a given value, the power supply being restored by the control means when the ferromagnetic element has cooled, whereby the current supply to the ferromagnetic element is applied in a sequence of pulses. A simple ferromagnetic element is preferably used; although a composite element such as that taught by the Carter-Krumme patent could be used.

The invention further provides a method of temperature regulation wherein an electric current from a power supply source is passed through a ferromagnetic element having a permeability substantially greater than one when its temperature is below its effective Curie temperature, to heat the element and raise its temperature to its effective Curie temperature, characterised in that the change in permeability that occurs when the element has its temperature raised to its effective Curie temperature is sensed and the power supply is interrupted or reduced temporarily each time the permeability of the element declines to a given value, the power supply being restored when the ferromagnetic element has cooled, whereby the current supply to the element is applied in a sequence of pulses.

In the preferred embodiment, radio frequency current, preferably in the general range of 5 to 20 MHz, is passed through the ferromagnetic element, either directly or by induction. The amplitude of the current is selected so as to heat the element well above its effective Curie. An advantage of this over the prior art is that it may employ a much larger current than was feasible with the prior art. The current will quickly increase the temperature of the element to its effective Curie. As the element is increasing in temperature through its Curie transition the permeability of the ferromagnetic element will drop sharply. This sharp drop is sensed and, when sensed, the current to the element is cut-off. The element then cools below the effective Curie and the current is restored so as to again heat the element to its effective Curie. The process then n repeats itself, hence a pulsating large current is fed to the element in such a manner as to hold its temperature fairly constant.

The sharp drop in permeability may be sensed in several different ways. One such way is to have the winding of an auto-transformer around the ferromagnetic element. Another way is to sense the change in power drawn by the ferromagnetic element, since the device may be so designed that the power will decline when the permeability declines. When the power sharply declines the current is cut-off for a brief period and is then restored.

Arrangements according to the invention will now be further described by way of example, and with reference to the accompanying drawings.

Figure 1 is a schematic diagram of a prior art arrangement wherein RF current is fed through a ferromagnetic element by direct electrical connection thereto.

Figure 2 is a schematic diagram of a prior art arrangement wherein the RF current is fed through a ferromagnetic element by induction.

Figure 3 is a graph of the temperature regulation of the devices of Figures 1 and 2.

Figure 4 is a schematic diagram of one embodiment of the present invention.

Figure 5 is a schematic diagram of another embodiment of the present invention.

Figure 6 is a schematic diagram of still another embodiment of the present invention.

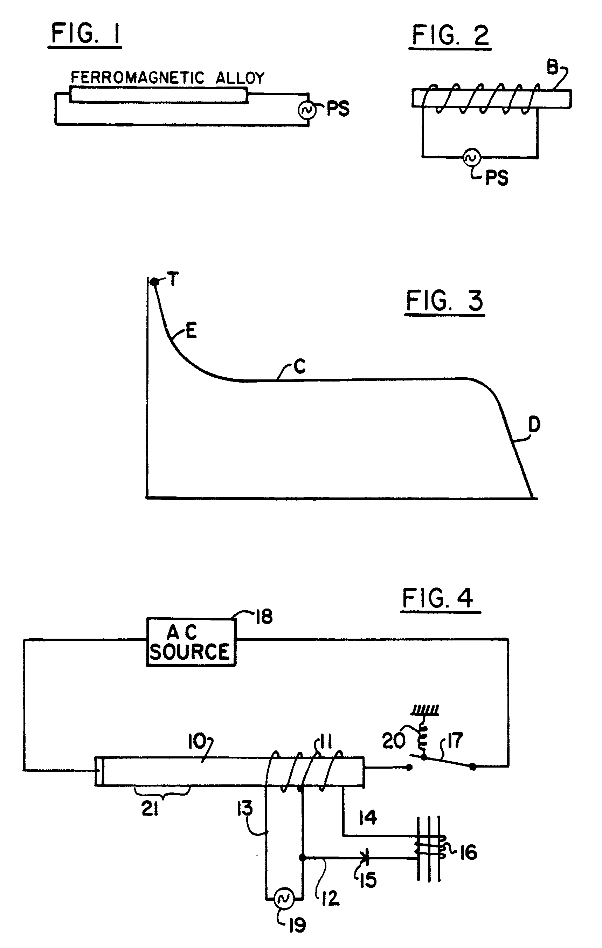

Figure 1 illustrates a prior art ferromagnetic strip B which may be 0.010 inches (0.25mm) thick and 0.2 inches (5mm) wide, composed of nickel-iron alloy having a permeability of over 100 and an effective Curie temperature in the range of $150\,^{\circ}C$ or more. The constant current power supply PS is capable of delivering sufficient power to the strip to heat it well above the effective Curie temperature, for example $70\,^{\circ}C$ above the effective Curie. If then the current is turned on, the strip B will be heated to temperature T (Fig. 3) which is say $70\,^{\circ}C$ above the effective Curie C. If now a source of cooling fluid, for example gaseous carbon dioxide is passed over strip B in progressively increasing quantity the temperature will fall along line E to level C and will remain there until ultimately the cooling is so great that the temperature will fall off along tail line D.

Figure 2 illustrates a similar prior art arrangement in which current is induced in ferromagnetic strip B by induction. This device will function in the same way as the device of Figure 1.

In Figures 1 and 2, if the amplitude of the constant current is reduced so as to reduce the initial temperature T, say from $70\,^{\circ}C$ above the effective Curie temperature, to say $10\,^{\circ}C$ above the effective Curie temperature, the flat part C of the curve will be greatly shortened and tail D will occur at a much smaller cooling rate.

The present invention avoids the portion E of the curve above the effective Curie temperature and also either avoids tail line D or at least postpones it to such a high cooling rate that it is no problem.

Referring to Figure 4, a ferromagnetic strip or bar 10 has a diameter or thickness of at least several thousandths of an inch (several times .025mm) The configuration of element 10 may vary depending on the desired end use. For example, if the end use is a soldering iron, element 10 may have the shape of a soldering iron.

A small pick-up coil 11 is adjacent to, or around a part of, the ferromagnetic strip, bar or rod 10. Coil 11 will function as an auto-transformer. The left half of the coil 11 is the primary and the right half of the coil 11 is the secondary. When the ferromagnetic member 10 is below Curie the primary of coil 11 is fed by a 60Hz alternating current source 19 such as the secondary of a small transformer fed by a 60Hz power line. The voltage of source 19 may be in the range of 8 to 24 volts. The control relay 16, 17 will be energized by the voltage or current induced in the secondary of auto-transformer 11 and will close the circuit to ferromagnetic member 10 when the ferromagnetic member 10 is below Curie. That is, below Curie, the ferromagnetic member 10 has high permeability and current will be induced in the secondary of auto-transformer 11. The secondary of auto-transformer 11 applies an a.c. voltage across wires 12 and 14. This voltage is rectified by rectifier 15 and feeds relay coil 16, attracting armature 17 to close a circuit from source 18 through ferromagnetic member 10. The source may be in the range of 5 to 20 MHz, for example, and feeds sufficient RF current through member 10 to heat it well above Curie. As the member 10 is heated near or above Curie the auto-transformer 11 is no longer effective since the permeability of member 10 has dropped toward unity, hence the voltage in the secondary of the auto-transformer falls. Then, the relay coil 16 is deenergized and armature 17 opens the circuit under the pull of spring 20. Next, the current to the ferromagnetic member 10 from R.F. source 18 is cut-off. The ferromagnetic member 10 then cools and when its temperature falls below Curie the auto-transformer 11 again becomes operative due to the high permeability of member 10. The secondary of auto-transformer 11 now puts out full voltage, the relay 16, 17 closes and current from source 18 is again passed through member 10 to heat it above Curie. The cycle then repeats over and over.

Solid state controls may replace parts 15, 16, 17.

The member 10 may be of high permeability such as Invar, Alloy 42, or a ternary alloy composed of 45% nickel, 46% iron and 9% molybdenum.

The parameters such as the amplitude of the current from source 18, time delay etc. of relay 16, 17 may be selected so that the relay 16, 17 opens and closes rapidly (several times a second). In the solid state version, the time delay of the parts will be selected to get the proper frequency for the opening and closing of the solid state switch corresponding to relay 16, 17. If then there is a high rate of extraction of heat from member 10 the relay 16, 17 will be closed longer than it is open etc. But if one section 21 of the member 10 has much more heat extracted therefrom than is extracted from other equally wide sections, the section 21 will receive more heat from the current as will be explained. In such case, the section 21 will remain far below Curie and will not rise above Curie when the relay armature 17 is closed. Therefore, the skin depth of the current in section 21 will remain smaller than for the remainder of member 10. Hence, section 21 will have higher resistance per unit of length than the rest of member 10. Since the same current traverses the entire length of member 10, section 21 will get more heat per unit length, and thus provide more heat to offset the fact that there is greater extraction of heat from section 21.

R.F. source 18 may be a constant current source but this is not necessary. The fact that it is disconnected from the load above Curie is sufficient control over the current.

A key point is that means are employed to detect the transition from below to above Curie and in response to detecting that transition the current through the ferromagnetic bar is cut off. If the device is arranged to cycle on and off, and if the "off" periods are kept short, the device should hold its temperature quite constant.

In connection with Figure 4, it is preferable for the relay 16, 17 to completely disconnect the source 18 from the ferromagnetic strip 10. However, it would not depart from the broader aspects of the invention to reduce the current to the ferromagnetic element 10, when relay 16, 17 opens, instead of cutting the current clear off. This may be accomplished by placing a resistor across the contacts of relay 16, 17.

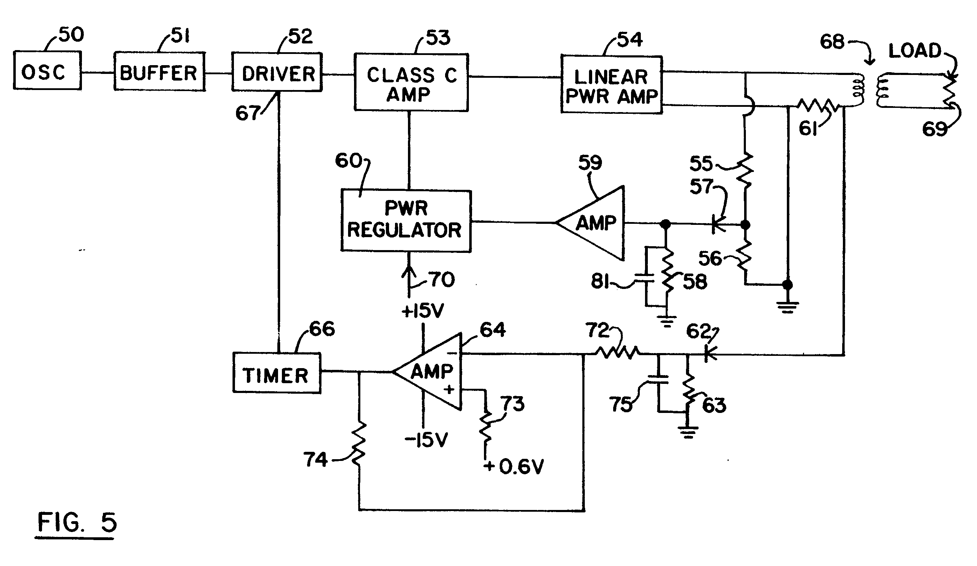

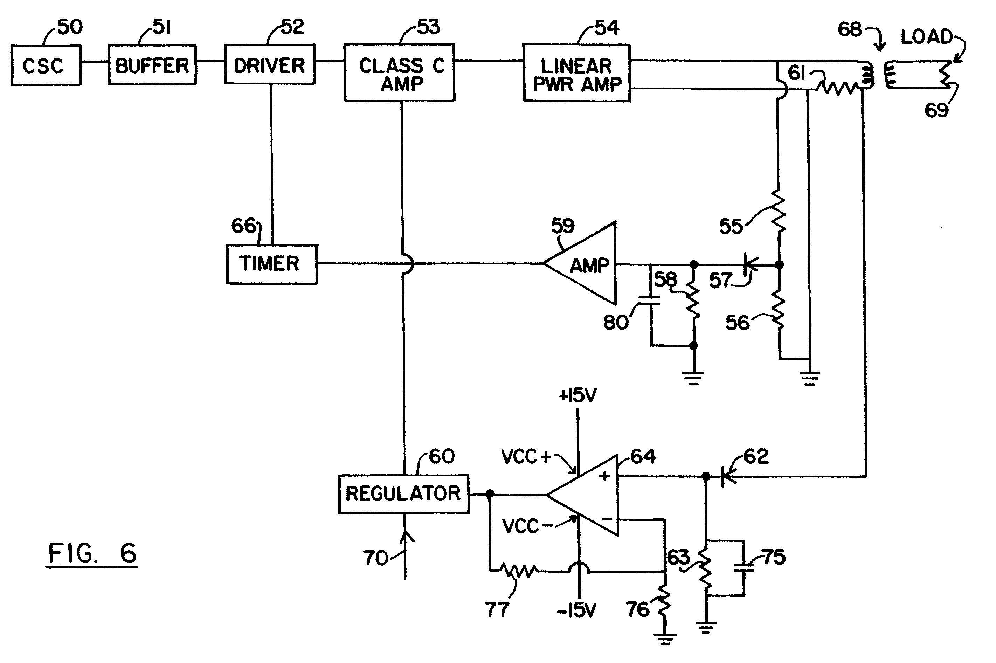

Figures 5 and 6, illustrate a different way of sensing the Curie transition. In these figures the change in power, that occurs when the temperature increases through the Curie transition is sensed, and in response to sensing that change in power, the current to the ferromagnetic element is either cut-off or reduced.

In both Figures 5 and 6 the load 69 is the high permeability ferromagnetic element and may have the composition, shape, and size described above, or as desired for any given end use.

Figure 5 illustrates a constant voltage power supply for use with the invention. This power supply has conventional oscillator 50, conventional buffer 51, conventional driver 52, and conventional class C amplifier 53, stages. While a wide variety of such equipment is available, one suitable form is shown in The ARRL 1985 Handbook (62nd Ed., 1985), published by the American Radio Relay League, Chapter 30, pages 30-24 to 30-26. The driver 52 has an input 67 to key the same on and off and this corresponds to the key jack JI on page 30-24 of said handbook. Preferably, the driver 52 is keyed by the contacts of a small fast electromagnetic relay (not shown) in a conventional fashion; the relay coil being energized by input 67.

The linear power amplifier 54 may be any, of many, suitable linear power amplifiers, for example it may be the 140 Watt Solid State Linear Amplifier, shown on pages 30-27 to 30-30 of said ARRL 1985 Handbook. See also the Motorola RF Data Manual (3rd, Ed., 1983), pages 4-194 to 4-199. The output of linear power amplifier 54 is fed through resistor 61, which feeds impedance matching transformer 68 which in turn feeds the load 69.

The voltage at the output of the linear power amplifier 54 is held constant by the components 55-60 as follows. Resistors 55 and 56 form a voltage divider across the output of power amplifier 54. The diode 57 feeds resistor 58 and capacitor 81, and amplifier 59, so that the output of the latter reflects the voltage at the output of power amplifier 54. That output feeds power regulator 60 which may be Texas Instruments Inc. Type LM 117, described on pages 99 to 103 of The Voltage Regulator Handbook published by Texas Instruments, Inc. This regulator 60 controls the main power input circuit 70 to the Class C amplifier 53 to thus raise or lower the output voltage thereof as necessary to keep the output voltage of linear amplifier 54 fairly constant. This regulator 60 has a built-in conventional standard voltage reference source which is compared with the voltage at the output of amplifier 59, and the regulator 60 then functions to hold the voltage at the output of linear amplifier 54 constant.

If now the impedance of ferromagnetic load element 69 drops due to a rise in temperature through the Curie transition, the current through resistor 61 increases and the voltage at the input of diode 62 increases thereby increasing the voltage at the negative (-) input of operational amplifier 64, the output of which feeds timer 66 with a decreasing voltage which in turn opens the circuit at input 67 of driver 52 turning off the driver 52, the Class C amplifier 53 and the linear power amplifier for a time interval between 0.1 and 0.5 seconds; ; this time period being manually adjustable by varying said timer 66. At the end of the selected time interval the driver 52 is turned on by timer 66 and power to the load 69 resumes. Current will again flow through resistor 61 to feed the load 69 and when the load impedance again drops the above process will repeat itself shutting off the power. In this way the power to the load 69 will pulsate as required.

Timer 66 has a built in standard reference voltage which is compared with the voltage at the output of amplifier 64, and the timer is triggered to start its time period according to the result of this comparison of the output voltage of amplifier 64 with the standard reference voltage. When this happens the timer 66 opens the keying circuit 67 to cut-off all power at the output of linear amplifier 54.

Figure 6 illustrates a constant current power supply suitable for use with the invention.

The components for the constant current supply of Figure 6 are basically the same as for the constant voltage supply of Figure 5, and like reference numbers are used to represent like parts.

The power generating stages 50 to 54 in Figure 6 are essentially the same as for Figure 5, although they are controlled in a different way; and therefore it is unnecessary to further describe those stages.

The current from the output of power amplifier 54 to the load 69 is held constant by components 60, 62, 63 and 64 as follows. When the current through resistor 61 increases the voltage drop across that resistor 61 is fed to the input of operational amplifier 64 whose output controls power regulator 60 (which may be Texas Instruments, Inc. Type LM 117 described above). The power regulator 60 controls the voltage fed to Class C amplifier 53 to thus hold the output current of power amplifier 54 constant. As stated in connection with Figure 5 the regulator 60 has a built-in standard reference voltage which is compared with the voltage at the output of amplifier 64, and the regulator 60 functions to keep the two voltages the same and thus keep the current at load 69 constant.

When the load resistance of the load 69 (Fig. 6) falls, due to a rise in temperature through the Curie transition, the voltage at the output of power amplifier 54 also falls (due to the constant-current circuit 60, 62, 63, 64), and this voltage drop is sensed at the positive (+) input of operational amplifier 59. The amplifier then delivers a trigger pulse to the timer 66 which then opens the keying circuit 67 of driver 52 and shuts off all power at the output of power amplifier 54 for a time interval between 0.1 and 0.5 seconds (the timer 66 may be provided with a manual adjustment o enable one to select the time interval he wants). When the time interval is up, the power is restored and the cycle repeats itself. This continues as long as desired, with the result that a pulsating current is applied to the load 69. As stated in conjunction with Figure 5, the timer 66 has a built-in standard reference voltage which is compared with the voltage at the output of amplifier 59. When the voltage at the output of amplifier 59 drops below the reference voltage, the timer 66 cuts-off driver 52 for a predetermined time interval as explained in connection with Figure 5.

The operational amplifiers 59 and 64 of both Figures 5 and 6 may be Type uA741M or uA741C, manufactured by Texas Instruments, Inc.

The timer 66 of both Figures 5 and 6 may be Type 555 manufactured by Texas Instruments, Inc. When this form of timer is used the input signal is fed into the Trigger (pin 2) of the timer 66.

The impedance matching transformer 68 in both Figures 5 and 6 may be designed and/or selected according to conventional practices such as those described in said Motorola RF Device Data manual pages 4-145 to 4-153, or said ARRL 1985 Handbook, Figure 44, page 30-28.

The resistance values of the various resistors may be as follows; it being understood of course that changes are necessary for different designs:

| Resistor | Ohms |
|---|---|
| 55 | 1000 |
| 56 | 10 |
| 58 | 5600 |
| 61 | 0.01 |
| 63 | 5600 |
| 72 | 1000 |
| 73 | 5900 |
| 74 | 56000 |
| 76 | 7800 |
| 77 | 20000 |

Capacitors 75, 80 and 81 may have a capacity of 0.001 mfd.

In connection with Figures 4, 5 and 6 it is noted that the current fed to the load 10 or 69, as the case may be, is not limited by the permissible temperature T (Fig. 3). The current that may be applied to the load 10 or 69 may be much higher than is permissible with Figures 1 and 2 or with any other known prior art. If a very large cooling load is applied to ferromagnetic elements 10 or 69, the heavy current to those elements will be on a much larger percentage of the time than will be the case for a small cooling load. For example, if the cooling load is light, the heavy current will quickly reheat the ferromagnetic load element 10 or 69, after the current is restored by the closing of relay 16, 17 or by the expiration of the time interval of timer 66. But if the cooling load is very heavy the time Period for heating the ferromagnetic load element after the current is turned on will be longer than was the case for the light load.

Thus, with the present arrangements, instead of the curve T,E,C, D of Figure 3, which is typical of the prior art, the curve would consist of a single horizontal substantially straight line at the effective Curie temperature C.

Another advantage of the invention over the prior art referred to above, is that it will work over a very wide band of frequencies. For example, the device of Figure 4, will work, even if power supply 18 has an output frequency as low as 60 Hz or even lower. In such a case the device would lose the value of providing greater heat to a limited section 21 (Fig. 4), that is cooled more than other sections, if the strip or bar 10 or 69, is of small size.

The feature of providing increased heating to a limited section such as 21, is applicable to all forms of the invention (Figures 4, 5 and 6), if the frequency is high enough to provide the necessary change in skin depth. However, in connection with Figures 5 and 6 the frequency and the size of the ferromagnetic element should be so related that there is a substantial change in skin depth, due to the change in permeability, as the temperature goes through the Curie transition if a section such as 21 is to get added heat when it is cooled. A strip several thousandths of an inch (several times 0.025mm) thick will meet this requirement in the 8-20 MHz range. For any frequency the ferromagnetic load may be several skin depths thick, for example, to meet this requirement.

The change in skin depth during the Curie transition will result in a change in resistance of the load 69, which will result in a change in power, which is sensed and used as a control parameter.

The invention has end uses wherever it is desired to hold the temperature of a strip, rod, bar, or other configuration constant. One such use for example is in soldering as it is often undesirable to overheat apparatus being soldered. Hence, the ferromagnetic element 10 or 69 may be all or part of an element being soldered, or it may be located in contact with an element being soldered.

The ferromagnetic elements 10 or 69 may also be used as heaters to heat chemicals to make sure that chemical reactions occur at predetermined constant temperatures.

## Claims

1. A temperature regulating apparatus comprising a ferromagnetic element (10,69) having a permeability substantially greater than one when its temperature is below its effective Curie temperature, and a source of electrical power supply (18;50,51,52) connected to pass electric current through said element thereby to heat it to raise its temperature to its effective Curie temperature, characterised by control means that includes sensing means (11;55,56;61) for sensing the change in permeability that occurs when the ferromagnetic element has its temperature raised to its effective Curie temperature and switching or modulating means (16,17;66) tore and swim or modulating means (16,l7;66) that temporarily interrupts or reduces the power supply to said ferromagnetic element each time the permeability of the ferromagnetic element declines to a given value, the power supply being restored by the control means when the ferromagnetic element has cooled, whereby the current supply to the ferromagnetic element is applied in a sequence of pulses.

2. An apparatus according to Claim 1, wherein the sensing means comprises a sensing coil (11) around or adjacent at least a part of the ferromagnetic element (10), and the switching or modulating means comprises a switching device (16,17) connected in circuit with the coil and operative in the Circuit between the ferromagnetic element and its power source (18) to interrupt or modulate the power supply to the ferromagnetic element whenever the permeability sensed by the coil declines to a given value and to restore the power supply when the permeability rises again as the temperature of the element falls.

3. Apparatus according to Claim 2, wherein the sensing coil is supplied from an a.c. supply (19) and acts as an auto-transformer.

4. Apparatus according t o Claim 2 or Claim 3, wherein the sensing coil is around a part only of the ferromagnetic element and another part (21) of said element is subjected to a greater cooling effect than the remainder.

5. Apparatus according to any of Claims 2 to 4, wherein the power source for the ferromagnetic element is a radio frequency power source.

6. Apparatus according to Claim 1, wherein the sensing means (55,56;61) for sensing the change in permeability of the ferromagnetic element (69) is arranged to sense the power dissipated in said element as it changes with changes in the permeability.

7. Apparatus according to Claim 6, wherein a circuit (53-60) is provided for maintaining the voltage from the power supply (50-52) as applied to the ferromagnetic element substantially constant and the sensing means (61) is arranged to sense changes in the current flowing to the ferromagnetic element.

8. Apparatus according to Claim 6, wherein a circuit (53,54,60-64) is provided for maintaining the current as supplied by the power supply (50-52) to the ferromagnetic element substantially constant and the sensing means (55,56) is arranged to sense changes in the voltage applied to the ferromagnetic element.

9. Apparatus according to Claim 7, wherein the constant voltage circuit comprises means, such as a voltage divider (55,56), to sense the power supply output voltage from a power amplifier (54), and a power regulator (60) for comparing the sensed voltage value with a reference voltage (70) and delivering a control output to regulate the output of a control amplifier (53) that is applied to the power amplifier (54).

10. Apparatus according to Claim 8, wherein the constant current circuit comprises an impedance (61) in the output circuit of a power amplifier (54) to sense changes in the output current flowing to the ferromagnetic element as changes in voltage drop across the impedance, and a power regulator (60) for comparing the sensed voltage value with a reference value (70) and delivering a control output to regulate the output of a control amplifier (53) that is applied to the power amplifier (54).

11. Apparatus according to Claim 7 or Claim 9, wherein the sensing means comprises an impedance (61) in the power supply output to the ferromagnetic element to sense changes in current as changes in voltage drop across the impedance.

12. Apparatus according to Claim 8 or Claim 10, wherein the sensing means comprises means, such as a voltage divider (55,56), for sensing the voltage across the power supply output to the ferromagnetic element.

13. Apparatus according to any of the preceding Claims 6 to 12, wherein the control means comprises a timer (66) that responds to the signal from the sensing means, indicating a decline in permeability to the given value, by interrupting the normal power supply to the ferromagnetic element for a time interval determined by the timer, after the elapse of which time interval the power supply is restored.

14. Apparatus according to Claim 13, wherein the source of the power supply to the ferromagnetic element comprises an oscillator (50), a buffer (51) and a driver (52), and the timer acts to interrupt and restore the output of the driver.

15. A method of temperature regulation wherein an electric current from a power supply source is passed through a ferromagnetic element having a permeability substantially greater than one when its temperature is below its effective Curie temperature, to heat the element and raise its temperature to its effective Curie temperature, characterised in that the change in permeability that occurs when the element has its temperature raised to its effective Curie temperature is sensed and the power supply is interrupted or reduced temporarily each time the permeability of the element declines to a given value, the power supply being restored when the ferromagnetic element has cooled, whereby the current supply to the element is applied in a sequence of pulses.

16. A method according to Claim 15, wherein the decline in permeability is sensed by sensing the resulting decline in the electrical power dissipated by the ferromagnetic element.

17. A method according to Claim 16, wherein the decline in electrical power dissipated is sensed by maintaining either the voltage or the current of the power supply output to the ferromagnetic element substantially constant and sensing the other non-constant value of current or voltage that consequently varies according to variations in the power dissipated.

18. A method according to any of Claims 15 to 17, wherein each temporary interruption or reduction in the power supply is maintained for a predetermined timed interval, after which interval the power supply is restored.

**Revendications**

1. Dispositif de réglage de la température, comprenant un élément ferromagnétique (10,69), présentant une perméabilité sensiblement supérieure à celle qu'il présente lorsque sa température est située au-dessous de sa température de Curie effective, et une source de puissance électrique (18;50,51,52), reliée pour faire passer un courant électrique par ledit élément, de manière à le chauffer pour élever sa température afin qu'elle atteigne sa température de Curie effective, caractérisé par un moyen de commande qui comprend des moyens de mesure (11;55,56,61), pour mesurer la variation de la perméabilité qui se manifeste lorsque l'élément ferromagnétique voit sa température augmenter pour atteindre sa température de Curie effective et des moyens de commutation ou de modulation (16,17;66) qui interrompent ou réduisent temporairement l'alimentation électrique audit élément ferromagnétique, chaque fois que la perméabilité de l'élément ferromagnétique diminue jusqu'à une valeur donnée, l'alimentation électrique étant restaurée par le moyen de commande lorsque l'élément ferromagnétique s'est refroidi, de manière que l'alimentation électrique à l'élément ferromagnétique soit réalisée sur un mode à successions d'impulsions.

2. Dispositif selon la revendication 1, dans lequel la moyen de mesure comprend une bobine de mesure (11) entourant ou adjacente au moins d'une partie de l'élément ferromagnétique (10), et le moyen de commutation ou de modulation comprenant un dispositif de commutation (16,17) relié en circuit à la bobine et agissant dans le circuit, entre l'élément ferromagnétique et sa source électrique (18), pour interrompre ou moduler l'alimentation électrique à l'élément ferromagnétique, si la perméabilité mesurée par la bobine diminue jusqu'à une valeur donnée et pour restaurer l'alimentation électrique lorsque la perméabilité remonte, lorsque la température de l'élément diminue.

3. Dispositif selon la revendication 2, dans lequel la bobine de mesure est alimentée par une alimentation à courant alternatif (19) et agit comme un autotranformateur.

4. Dispositif selon la revendication 2 ou 3, dans lequel la bobine de mesure entoure seulement une partie de l'élément ferromagnétique et une autre partie (21) de l'élément ferromagnétique étant sujette à un effet de refroidissement plus intense que le reste.

5. Dispositif selon l'une quelconque des revendications 2 à 4, dans lequel la source électrique de l'élément ferromagnétique est une source électrique à fréquence radio.

6. Dispositif selon la revendication 1, dans lequel le moyen de mesure (55,56;61) servant à mesurer la variation de la perméabilité de l'élément ferromagnétique (69) est agencé pour mesurer la puissance dissipée dans ledit élément lors de son changement conjoint à celui de la perméabilité.

7. Dispositif selon la revendication 6, dans lequel un circuit (53 à 60) est prévu pour maintenir sensiblement constante la tension provenant de la source électrique (50 à 52), lorsqu'elle est appliquée à l'élément ferromagnétique, et le moyen de mesure (61) étant agencé pour mesurer la variation du courant passant vers l'élément ferromagnétique.

8. Dispositif selon la revendication 6, dans lequel un circuit (53,54,60 à 64) est prévu pour maintenir sensiblement constant le courant fourni par l'alimentation électrique (50 à 52) à l'élément ferromagnétique, et le moyen de mesure (55,56) étant agencé pour mesurer les variations de tension appliquée à l'élément ferromagnétique.

9. Dispositif selon la revendication 7, dans lequel le circuit à tension constante comprend un moyen, tel qu'un diviseur de tension (55,56), pour mesurer la tension de sortie de l'alimentation électrique avec un amplificateur de puissance (54), et un régulateur de puissance (60), pour comparer la valeur mesurée de la tension à une tension de référence (70) et fournir un signal de sortie de commande afin de régler le signal de sortie de l'amplificateur de commande (53), qui est appliqué à l'amplificateur de puissance (54).

10. Dispositif selon la revendication 8, dans lequel le circuit à courant constant comprend une impédance (61) placée dans le circuit de sortie d'un amplificateur de puissance (54), afin de mesurer les variations du courant de sortie passant vers l'élément ferromagnétique, sous forme de variations de chute de tension dans l'impédance, et un régulateur de puissance (60), pour comparer la valeur mesurée de la tension à une valeur de référence (70) et fournir un signal de sortie de commande afin de régler le signal de sortie d'un amplificateur de commande (53), qui est appliqué à l'amplificateur de puissance (54).

11. Dispositif selon la revendication 7 ou 9, dans lequel le moyen de mesure comprend une impédance (61), placée à la sortie de l'alimentation électrique vers l'élément ferromagnétique, afin de mesurer les variations du courant de sortie passant vers l'élément ferromagnétique, sous forme de variations de chute de
tension dans l'impédance.

12. Dispositif selon la revendication 8 ou 10, dans
lequel le moyen de mesure comprend un
moyen, tel qu'un diviseur de tension (55,56),
pour mesurer la tension à la sortie de l'alimentation électrique de l'élément ferromagnétique.

13. Dispositif selon l'une quelconque des revendications 6 à 12, dans lequel le moyen de commande comprend une horloge (66) qui répond
au signal provenant du moyen de mesure,
indiquant une diminution de la perméabilité
jusqu'à la valeur donnée, en interrompant l'alimentation électrique normale à l'élément ferromagnétique pendant un intervalle de temps
déterminé par l'horloge, l'alimentation électrique étant restaurée une fois ce temps écoulé.

14. Dispositif selon la revendication 13, dans lequel la source de l'alimentation électrique de
l'élément ferromagnétique comprend un oscillateur (50), un tampon (51) et un élément de
pilotage (52), et l'horloge agissant pour interrompre et restaurer le signal de sortie de l'élément de pilotage.

15. Procédé de régulation de température, dans
lequel un courant électrique provenant d'une
source d'alimentation électrique passe dans un
élément ferromagnétique présentant une perméabilité sensiblement supérieure lorsque sa
température est inférieure à sa température de
Curie effective, afin de chauffer l'élément et
d'élever sa température à la température de
Curie effective, caractérisé en ce que la variation de perméabilité survenant lorsque la température de l'élément s'est accrue jusqu'à la
température de Curie effective est mesurée et
que l'alimentation électrique est interrompue
ou réduite temporairement chaque dois que la
perméabilité de l'élément diminue jusqu'à une
valeur donnée, l'alimentation électrique étant
restaurée lorsque l'élément ferromagnétique
est refroidi, de manière que l'alimentation électrique de l'élément s'effectue suivant un mode
à successions d'impulsions.

16. Procédé selon la revendication 15, dans lequel
la diminution de perméabilité est mesurée en
mesurant la diminution résultant de la puissance électrique dissipée par l'élément ferromagnétique.

17. Procédé selon la revendication 1, dans lequel
la diminution de puissance électrique dissipée est mesurée en maintenant sensiblement
constante d'une part la tension du courant de
la sortie de l'alimentation électrique à l'élément
ferromagnétique et en mesurant d'autre part
l'autre valeur, non constante, de l'intensité ou
tension, qui varie en conséquence en fonction
des variations de la puissance dissipée.

18. Procédé selon l'une quelconque des revendications 15 à 17, dans lequel chaque interruption ou réduction temporaire de l'alimentation
électrique est maintenue pendant un intervalle
de temps prédéterminé, à la suite duquel l'ali-
mentation électrique est restaurée.

**Ansprüche**

1. Eine Temperaturregeleinrichtung mit einem
ferromagnetischen Element (10, 69), das eine
Permeabilität hat, die wesentlich größer als 1
ist, wenn seine Temperatur unterhalb seiner
effektiven Curie-Temperatur liegt, und mit einer
elektrischen Stromversorgungsquelle (18; 50,
51, 52) zur Durchleitung elektrischen Stromes
durch das genannte Element, um es so zu
erwärmen und seine Temperatur auf seine ef-
fektive Curie-Temperatur anzuheben, **gekenn-
zeichnet durch** eine Regeleinrichtung, die
aufweist Tastmittel (11; 55, 56; 61) zum Abtasten der Änderung der Permeabilität, die auftritt, wenn die Temperatur des ferromagnetischen Elements auf seine effektive Curie-Temperatur angehoben ist, und eine Schalt- oder
Modulationseinrichtung (16, 17; 66), die zeitweilig die Stromzuführung zu dem ferromagnetischen Element unterbricht oder verringert jedesmal dann, wenn die Permeabilität des fer-
romagnetischen Elements auf einen vorgege-
benen Wert abfällt, wobei die Stromzuführung
durch die Regeleinrichtung wieder hergestellt
wird, wenn das ferromagnetische Element abgekühlt ist, wodurch die Stromzuführung zu
dem ferromagnetischen Element als Folge von
Pulsen erfolgt.

2. Temperaturregeleinrichtung nach Anspruch 1,
**dadurch gekennzeichnet,** daß die Tastmittel
aufweisen eine Tastspule (11), die sich rund
um oder benachbart zu wenigstens einem Teil
des ferromagnetischen Elements (10) erstreckt
und daß die Schalt- oder Modulationseinrichtung eine Schalteinrichtung (16, 17) aufweist,
die in einem Kreis mit der Spule liegt und
wirksam ist in dem Kreis zwischen dem ferro-
magnetischen Element und seiner Stromver-
sorgung, um die Stromversorgung zu dem ferromagnetischen Element zu unterbrechen oder zu modulieren immer dann, wenn die durch die Spule abgetastete Permeabilität zu einem vorgegebenen Wert abfällt, und um die Stromzuführung wieder herzustellen, wenn die Permeabilität wieder ansteigt, wenn die Temperatur des Elements abfällt.

3. Temperaturregeleinrichtung nach Anspruch 2, **dadurch gekennzeichnet,** daß die Abtastspule von einer Wechselstromquelle (19) versorgt wird und als Autotransformator arbeitet.

4. Temperaturregeleinrichtung nach Anspruch 2 oder 3, **dadurch gekennzeichnet,** daß die Abtastspule sich nur um einen Teil des ferromagnetischen Elements erstreckt und ein anderer Teil (21) des genannten Elements einem größeren Kühleffekt ausgesetzt ist als der Rest.

5. Temperaturregeleinrichtung nach einem der Ansprüche 2 bis 4, **dadurch gekennzeichnet,** daß die Stromversorgungsquelle für das ferromagnetische Element eine Hochfrequenzstromversorgungsquelle ist.

6. Temperaturregeleinrichtung nach Anspruch 1, **dadurch gekennzeichnet,** daß die Abtastmittel (55, 56; 61) zur Abtastung der Änderung der Permeabilität des ferromagnetischen Elements (69) so angeordnet sind, daß sie die in dem genannten Element abgegebene Leistung abtasten, wenn sie sich mit Änderungen in der Permeabilität ändert.

7. Temperaturregeleinrichtung nach Anspruch 6, **dadurch gekennzeichnet,** daß ein Schaltkreis (53-60) vorgesehen ist, um die von der Stromversorgung (50-52) an das ferromagnetische Element angelegte Spannung im wesentlichen konstant zu halten, und daß die Tastmittel (61) angeordnet sind, um Änderungen in dem Stromfluß zu dem ferromagnetischen Element abzutasten.

8. Temperaturregeleinrichtung nach Anspruch 6, **dadurch gekennzeichnet,** daß ein Schaltkreis (53, 54, 60-64) vorgesehen ist, um den von der Stromversorgung (50-52) dem ferromagnetischen Element zugeführten Strom im wesentlichen konstant zu halten, und daß die Tastmittel (55, 56) angeordnet sind, um Änderungen der an das ferromagnetische Element angelegten Spannung abzutasten.

9. Temperaturregeleinrichtung nach Anspruch 7, **dadurch gekennzeichnet,** daß der Konstantspannungsschaltkreis aufweist Mittel, beispielsweise einen Spannungsteiler (55, 56), um die Ausgangsspannung der Stromversorgung von einem Leistungsverstärker (54) abzutasten, und einen Leistungsregler (60), um den abgetasteten Spannungswert mit einer Bezugsspannung (70) zu vergleichen und ein Ausgangsregelsignal zur Regelung des Ausgangssignals eines Regelverstärkers (53) zu regeln, das an dem Leistungsverstärker (54) angelegt ist.

10. Temperaturregeleinrichtung nach Anspruch 8, **dadurch gekennzeichnet,** daß der Konstantstromkreis aufweist eine Impedanz (61) in dem Ausgangskreis eines Leistungsverstärkers (54), um die Änderungen in dem zu dem ferromagnetischen Element fließenden Strom als Änderungen in dem Spannungsabfall über die Impedanz festzustellen, und einen Leistungsregler (60) zum Vergleich des abgetasteten Spannungswertes mit einem Bezugswert (70) und zur Abgabe eines Regelausgangssignals zur Regelung des Ausgangssignals eines Regelverstärkers (53), das dem Leistungsverstärker (54) zugeführt ist.

11. Temperaturregeleinrichtung nach Anspruch 7 oder 8, **dadurch gekennzeichnet,** daß die Tastmittel eine Impedanz (61) in dem Stromversorgungsausgang zu dem ferromagnetischen Element aufweisen, um Änderungen des Stromes als Änderungen in dem Spannungsabfall über der Impedanz abzutasten.

12. Temperaturregeleinrichtung nach Anspruch 8 oder 10, **dadurch gekennzeichnet,** daß die Tastmittel Mittel, beispielsweise einen Spannungsteiler (55, 56) aufweisen zur Abtastung der Spannung über dem Stromversorgungsausgang zu dem ferromagnetischen Element.

13. Temperaturregeleinrichtung nach einem der vorhergehenden Ansprüche 6 bis 12, **dadurch gekennzeichnet,** daß die Regeleinrichtung einen Zeitschalter (66) aufweist, der auf das Signal von den Tastmitteln anspricht und einen Abfall der Permeabilität auf den vorgegebenen Wert anzeigt durch Unterbrechung der normalen Stromversorgung für das ferromagnetische Element für ein durch den Zeitschalter bestimmtes Zeitintervall, nach dessen Ablauf die Stromversorgung wieder hergestellt wird.

14. Temperaturregeleinrichtung nach Anspruch 13, **dadurch gekennzeichnet,** daß die Quelle der Stromversorgung zu dem ferromagnetischen Element aufweist einen Oszillator (50), einen Puffer (51) und einen Treiber (52), und daß der Zeitschalter die Unterbrechung und Wiederherstellung des Ausgangs des Treibers bewirkt.

15. Verfahren zur Temperaturregelung, bei dem ein elektrischer Strom von einer Stromversorgungsquelle durch ein ferromagnetisches Element geleitet wird, das eine Permeabilität hat, die wesentlich größer als 1 ist, wenn seine Temperatur unterhalb seiner effektiven Curie-Temperatur liegt, um das Element zu erwärmen und seine Temperatur auf seine effektive Curie-Temperatur anzuheben, **dadurch gekennzeichnet,** daß die Änderung der Permeabilität, die auftritt, wenn die Temperatur des Elements auf seine effektive Curie-Temperatur angehoben ist, abgetastet und die Stromversorgung zeitweilig unterbrochen oder verringert wird jedesmal dann, wenn die Permeabilität des Elements auf einen vorgegebenen Wert abfällt, wobei die Stromversorgung wieder hergestellt wird, wenn das ferromagnetische Element abgekühlt ist, wodurch die Stromversorgung zu dem Element in einer Folge von Pulsen zugeführt wird.

16. Verfahren nach Anspruch 15, **dadurch gekennzeichnet,** daß der Abfall der Permeabilität festgestellt wird durch Abtastung des sich ergebenden Abfalls der elektrischen Leistungsabgabe durch das ferromagnetische Element.

17. Verfahren nach Anspruch 16, **dadurch gekennzeichnet,** daß der Abfall der elektrischen Leistungsabgabe festgestellt wird durch weitgehende Konstanthaltung entweder der Spannung oder des Stromes des Stromversorgungsausganges zu dem ferromagnetischen Element und durch Abtastung des anderen nichtkonstanten Wertes von Strom oder Spannung, die folglich variieren entsprechend den Änderungen der Leistungsabgabe.

18. Verfahren nach einem der Ansprüche 15 bis 17, **dadurch gekennzeichnet,** daß jede zeitweilige Unterbrechung oder Verringerung der Stromzuführung während eines vorbestimmten Zeitintervalls aufrechterhalten wird und daß nach dem Intervall die Stromzuführung wieder hergestellt wird.

FIG. 1

FERROMAGNETIC ALLOY

FIG. 2

FIG. 3

FIG. 4

FIG. 5

EP 0 209 215 B1